(19) Europäisches Patentamt
European Patent Office
Office européen des brevets

(11) **EP 1 930 744 A1**

(12) **DEMANDE DE BREVET EUROPEEN**

(43) Date de publication:
**11.06.2008 Bulletin 2008/24**

(51) Int Cl.:
**G01V 1/28** (2006.01)   **G01V 1/30** (2006.01)
**G01V 11/00** (2006.01)

(21) Numéro de dépôt: **07291427.8**

(22) Date de dépôt: **29.11.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK RS**

(30) Priorité: **11.12.2006 FR 0610792**

(71) Demandeur: **IFP**
**92852 Rueil-Malmaison Cédex (FR)**

(72) Inventeurs:
• **Nivlet, Philippe**
**75014 Paris (FR)**
• **Lucet, Nathalie**
**78800 Houilles (FR)**

(54) **Méthode de construction d'un modèle géologique d'une formation du sous-sol contraint par des données sismiques**

(57)    - Méthode de construction d'un modèle géologique d'une formation du sous-sol contraint par des données sismiques.
- On acquiert des diagraphies relatives à des propriétés géologiques et l'on construit un cube de faciès sismiques. On simule ensuite des diagraphies relatives à des propriétés géologiques ainsi que des diagraphies relatives à des faciès sismiques. Puis, on estime en tout point du sous-sol les distributions de proportions à l'aide des diagraphies acquises au puits et des diagraphies simulées. On définit alors une contrainte sismique en construisant un cube de proportions moyennes de faciès lithologique à partir de ces distributions de proportions estimées. Enfin, on construit un modèle géologique dans lequel les propriétés géologiques sont contraintes par ce cube de proportions moyennes de faciès lithologique.
- Application notamment à l'exploitation de gisements pétroliers.

Fig. 6B

EP 1 930 744 A1

## Description

La présente invention concerne une méthode pour construire un modèle géologique tridimensionnel représentatif de la structure d'une formation du sous-sol contraint par des données sismiques.

La méthode vise à donner à l'ingénieur les moyens d'exploiter au mieux les réserves d'un gisement pétrolier.

L'optimisation et l'exploitation des gisements pétroliers reposent sur une description aussi précise que possible de la structure et des propriétés pétrophysiques du gisement étudié. Pour ce faire, les spécialistes utilisent un outil qui permet de rendre compte de ces deux aspects de façon approchée : le modèle géologique. Un modèle géologique a donc pour vocation de rendre compte, au mieux, de la structure et des propriétés pétrophysiques d'un gisement. Le modèle géologique est, pour ce faire, constitué de différents éléments : un maillage qui constitue l'ossature du gisement et qui doit être représentatif de la structure, et des cartes tridimensionnelles de propriétés pétrophysiques associées à ce maillage et qui doivent être représentatives du comportement statique ou dynamique du gisement. Cette association consiste à attribuer une valeur pétrophysique issue de cartes 3D à chaque maille du maillage.

Une carte tridimensionnelle de propriété pétrophysique fournit une représentation réaliste tridimensionnelle des hétérogénéités du sous-sol. Ces propriétés pétrophysiques, au sens large, peuvent être par exemple le type de roches (grès, sable, calcaire...), le type de porosité rencontrée (roche poreuse/peu poreuse), ou tout autre type de propriété discrète.

Classiquement ces cartes 3D sont obtenues à partir de méthodes stochastiques, s'appuyant sur des méthodes de simulation géostatistique. Ces techniques sont couramment utilisées dans ce contexte pour les raisons suivantes:

- elles peuvent être contraintes par certaines données comme par exemple les données de puits (carottes, ou lithofaciès interprétés à partir de diagraphies mesurées) ;

- elles peuvent s'adapter à une géométrie complexe en suivant un maillage complexe du sous-sol (dérivé par exemple d'une analyse stratigraphique préalable) ;

- elles reproduisent des caractéristiques globales des distributions de la propriété (proportions des différents faciès lithologique par exemple) ;

- elles reproduisent un modèle de variabilité spatiale de ces propriétés (variogramme) et fournissent donc des images du sous-sol réalistes du point de vue de cette variabilité ;

- elles peuvent intégrer des informations indirectes sur la géologie pour mieux estimer les variations latérales des hétérogénéités, en traitant si besoin le problème de rendre compatible des informations (directes et indirectes) dont le support de mesure et la résolution peuvent être très différents ;

- elles peuvent fournir de multiples réalisations équiprobables de la formation souterraine étudiée, et donc, permettent l'estimation des incertitudes liées à la modélisation.

Dans un contexte stochastique, on parle plutôt de réalisations que de modèles numériques. De la précision de ces réalisations stochastiques (cartes 3D de propriétés pétrophysiques) va donc directement dépendre la qualité de l'exploitation d'un gisement pétrolier. Il convient donc d'élaborer des réalisations stochastiques, et donc plus généralement des modèles géologiques, aussi cohérents que possibles avec l'ensemble des données collectées (puits, laboratoires,...) et notamment des données sismiques.

Avant de décrire l'état de la technique, il est nécessaire de préciser deux notions fondamentales dans l'intégration de données sismiques au cours de la modélisation géologique : faciès lithologique et faciès sismique.

Un faciès lithologique (lithofaciès) qualifie une propriété d'une roche. Par exemple, le faciès lithologique peut se référer à la nature géologique de la roche (argile ; grès ; calcaire...), à son type de porosité (roche non consolidée et très poreuse; roche peu poreuse...), à la nature du fluide piégé dans sa porosité (saumure ; huile ; gaz...). La variabilité spatiale des faciès lithologiques est caractérisée à une échelle fine (quelques centimètres). Les différents faciès lithologiques sont généralement définis lors d'une description de carottages du sous-sol, mais peuvent également résulter d'une interprétation des diagraphies enregistrées au niveau des puits.

Un faciès sismique est défini à partir des données sismiques, il traduit une homogénéité locale de l'information sismique. Il peut prendre un nombre fini de valeurs. Un faciès sismique peut être défini en carte bidimensionnelle, auquel cas il caractérise l'information portée par des portions de trace sismiques extraites sur un intervalle réservoir. Il peut également être défini dans un volume tridimensionnel représentant le sous-sol, auquel cas il caractérise l'information portée par des voxels sismiques (voisinages locaux) ayant des caractéristiques similaires. La relation mathématique entre l'information sismique et les faciès sismique, calibrée en cours d'analyse, est appelée fonction de classement.

**État de la technique**

*Construction d'un modèle géologique contraint par des données secondaires*

De nombreuses techniques permettant de construire un modèle géologique contraint par des données sismiques sont connues des spécialistes. On peut par exemple citer une technique de modélisation non stationnaire appelée simulation par gaussiennes seuillées. Cette technique est décrite dans le document suivant :

Le Loc'h G. and Galli A., 1997 : Truncated plurigaussian method : theoretical and practical points of view. In : Geostatistics Wollongong'96, E.Y. Baafi and N.A Schofield eds, Kluwer, p.211-222

Dans le cadre de cette méthode, des informations dites « indirectes » peuvent être issues de connaissances stratigraphiques (variations spatiales à grande échelle de la probabilité d'occurrence d'un certain objet géologique par exemple), ou dérivées d'interprétations de données sismiques. Dans tous les cas, ces informations secondaires, permettent de contraindre la variation spatiale des proportions moyennes de chaque faciès lithologique.

*Détermination de données secondaires*

Pour déterminer ces données secondaires, il existe différentes techniques également connues des spécialistes. On peut par exemple citer celle décrite dans le document suivant, et qui peut être utilisée par la méthode de simulation par gaussiennes seuillées :

Doligez B., Fournier F., Jolivet G., Gancarski S.°,Beucher H., 2002 : Seismic facies map integration in geostatistical geological model: a field case. EAGE, conference & technical exhibition of European Association of Geoscientists & Engineers, 64th, Florence, 27-30 May 2002, Extended abstracts, Vol. 2, P215-219.

Selon cette méthode, une analyse de la forme des traces sismiques entre deux horizons, issus de pointés sur des données sismiques, permet de calculer une carte bidimensionnelle de faciès sismique, et sa probabilité associée. Les puits situés dans une zone homogène du point de vue du faciès sismique permettent de calculer une courbe de variations verticales moyennes de proportions de faciès lithologique pour ce faciès sismique. Cette courbe est ensuite appliquée à tous les points de la carte 2D attribués dans ce même faciès sismique, sous réserve que la probabilité associée prenne une valeur suffisamment élevée. Dans le cas contraire, les variations verticales des proportions de faciès lithologiques sont réestimées par interpolation des autres données, par exemple par krigeage. A l'issue de l'analyse, on dispose en chaque point du sous-sol des probabilités moyennes de rencontrer les différentes instances du faciès lithologique.

L'inconvénient majeur de ce type d'approche est que la contrainte est issue d'une interprétation en carte bidimensionnelle. Dans le cas où le sous-sol présente une complexité verticale, il faut subdiviser le sous-sol en un grand nombre d'intervalles, délimités par des horizons pointés, et multiplier les interprétations en faciès sismiques pour chacun de ces intervalles. Par ailleurs, la qualité de l'interprétation en faciès sismique dépend grandement de la qualité du pointé des horizons, qui n'est pas toujours assurée, surtout en zone complexe.

Pour ces raisons, il est nécessaire d'extraire directement des données sismiques une information tridimensionnelle (faciès sismiques), comme décrit dans le document suivant :

Barens L., Biver P., 2004 : Reservoir Facies Prediction from Geostatistical Inverted Seismic Data, Abu Dhabi International Conference and Exhibition, 10-13 October, SPE 88690-MS.

Cette méthode permet de décrire les distributions de faciès lithologiques en les reliant directement aux distributions de proportions de faciès lithologiques par faciès sismique (dérivées des puits), et aux probabilités de faciès sismiques (dérivées de l'analyse en faciès sismiques). Cependant, cette méthode suppose que les distributions de faciès lithologiques par faciès sismique sont stationnaires spatialement. Dans la pratique, cette condition est rarement respectée, ce qui peut créer un biais important dans l'estimation des proportions moyennes de faciès lithologiques.

La méthode selon l'invention permet d'extraire directement des données sismiques une information secondaire tridimensionnelle, tout en prenant en compte la non-stationnarité des faciès lithologiques.

Ainsi, l'invention concerne une méthode de construction d'un modèle géologique d'une formation du sous-sol contraint par des données sismiques, à partir de diagraphies relatives à des propriétés géologiques dudit sous-sol acquises au sein d'au moins un puits traversant ledit sous-sol, et dans laquelle on construit au moins un cube de faciès sismiques. La méthode comporte les étapes suivantes :

- on génère des diagraphies géologiques simulées, correspondant à des réalisations équiprobables de diagraphies relatives à des propriétés géologiques, en réalisant une simulation séquentielle par indicatrice à partir desdites diagraphies acquises au puits ;

- on génère des diagraphies de faciès sismiques simulées, correspondant à des réalisations équiprobables de diagraphies relatives auxdits faciès sismiques, en interprétant lesdites diagraphies géologiques simulées ;

- on construit un cube de distributions de proportions de faciès lithologique en estimant en tout point du sous-sol lesdites distributions de proportions à l'aide desdites diagraphies acquises au puits et desdites diagraphies simulées ;

- on construit un cube de proportions moyennes de faciès lithologique à partir desdites distributions de proportions estimées en tout point du sous-sol ;

- on construit un modèle géologique dans lequel les propriétés géologiques sont contraintes par ledit cube de proportions moyennes de faciès lithologique.

Les diagraphies de faciès sismiques simulées peuvent être générées à l'aide d'une relation entre lesdites données sismiques et les faciès sismiques dudit cube, ladite relation étant obtenue par une analyse en faciès sismiques.

Les proportions moyennes de faciès lithologique peuvent être estimées en réalisant les étapes suivantes :

- on estime des distributions conditionnelles de proportions de faciès lithologiques par faciès sismique à partir desdites diagraphies acquises au puits et desdites diagraphies simulées, géologiques et de faciès sismiques ;

- on détermine des probabilités de classement desdits faciès sismiques ainsi qu'une relation entre lesdites données sismiques et lesdits faciès sismiques, à l'aide d'une analyse en faciès sismiques ;

- on estime en tout point du sous-sol lesdites proportions de faciès lithologiques en tout point du sous-sol, en combinant lesdites distributions conditionnelles auxdites probabilités de classement.

Les diagraphies géologiques simulées peuvent comporter au moins l'une des diagraphies suivantes : diagraphie de faciès lithologiques, diagraphie d'impédances d'ondes P et diagraphie d'impédances d'ondes S.

Les diagraphies simulées peuvent être générées en profondeur puis converties en temps à l'aide d'une loi de conversion temps-profondeur déterminée au niveau dudit puits.

Les diagraphies simulées et converties en temps peuvent être rééchantillonnées au pas desdites données sismiques.

Les diagraphies simulées relatives à des faciès lithologiques peuvent être rééchantillonées en déterminant une courbe de proportions verticales, en évaluant la fréquence d'apparition des différents faciès lithologiques dans une fenêtre temporelle glissante dont la taille correspond à la résolution verticale desdites données sismiques.

Les diagraphies simulées non relatives à des faciès lithologiques peuvent être rééchantillonées en appliquant un filtre fréquentiel passe-bas, afin d'éliminer les hautes fréquences non présentes dans lesdites données sismiques.

L'estimation des distributions de proportions de faciès lithologiques peut comporter l'utilisation de facteurs de non-stationnarité tels que la profondeur ou l'argilosité.

On peut estimer une incertitude sur lesdites distributions de proportions de faciès lithologique estimées en tout point du sous-sol.

On peut estimer l'incertitude en calculant au moins un des paramètres statistiques suivants : un écart type des distributions, un intervalle inter-quartile des distributions, un intervalle de confiance sur la moyenne des distributions.

D'autres caractéristiques et avantages de la méthode selon l'invention, apparaîtront à la lecture de la description ci-après d'exemples non limitatifs de réalisations, en se référant aux figures annexées et décrites ci-après.

## Présentation succincte des figures

La figure 1 présente des données diagraphiques disponibles au niveau d'un puits.

La figure 2 présente une carte de probabilité (PB) d'un faciès sismique particulier extraite d'un cube 3D le long d'un niveau réservoir.

La figure 3 représente dix réalisations équiprobables des colonnes en faciès géologiques, simulées à partir des données du puits présenté sur la figure 1.

La figure 4 présente les dix réalisations correspondantes de l'interprétation en faciès sismique à partir des données simulées sur la figure 3.

Les figures 5A et 5B présentent les cartes de proportions moyennes des argiles massives (AM) extraites le long d'un niveau réservoir : sur la figure 5A, ces proportions ont été obtenues sans l'aide de la méthode selon l'invention, sur la figure 5B, ces proportions ont été obtenues avec la méthode selon l'invention.

Les figures 6A et 6B présentent les cartes de proportions moyennes des argiles laminées (AL) extraites le long d'un niveau réservoir : sur la figure 6A, ces proportions ont été obtenues sans l'aide de la méthode selon l'invention, sur la figure 6B, ces proportions ont été obtenues avec la méthode selon l'invention.

**Description détaillée**

La méthode selon l'invention permet de construire un modèle géologique tridimensionnel d'une formation du sous-sol contraint par des données sismiques. La méthode comporte principalement les étapes suivantes :

1- Acquisition et traitement de données (ACQ) ;

2- Simulations de données à partir des données acquises (SIM) ;

3- Construction d'une contrainte sismique pour le modèle géologique (SC) ;

4- Construction du modèle géologique contraint par la contrainte sismique (GM).

1- Acquisition et traitement de données (ACQ) ;

La construction du modèle géologique selon l'invention s'appuie sur deux types de données :

*Les données géologiques*

Ces données sont acquises en profondeur à partir de mesures réalisées dans des puits, des diagraphies, ou en laboratoire sur des échantillons de roches tels que des carottes. Pour chaque puits, il est nécessaire d'acquérir les diagraphies suivantes :

- diagraphies nécessaires aux calculs d'attributs sismiques ;

- diagraphies nécessaires à la détermination d'une loi profondeur/temps ;

- diagraphie de faciès lithologiques ;

- diagraphies éventuelles pour compléter le modèle géologiques.

La diagraphie de faciès lithologiques, associée à un puits, est issue de l'interprétations des autres diagraphies par des techniques connues en soi. Ces faciès lithologiques permettent de décrire localement le sous-sol, en terme de types de roches (grès, sable, calcaire...), types de porosité rencontrée (roche non consolidée et très poreuse, roche peu poreuse...), nature du fluide piégé (saumure, huile, gaz)... La variabilité spatiale de ces faciès lithologiques est caractérisée à une échelle fine (quelques centimètres).

*Les données sismiques*

Ces données sont acquises en temps à partir de campagnes sismiques. Généralement il s'agit d'un ou plusieurs cubes d'amplitudes sismiques traités selon des méthodes bien connues des géophysiciens. A l'instar d'un modèle géologique, un cube sismique est constitué d'un maillage et de carte 3D d'amplitudes sismiques associées. Le maillage correspond à une discrétisation du sol en sous-volumes (appelés « voxel »), fonction du dispositif d'acquisition, et qui permet, via la carte 3D associée, d'affecter en chacun de ces volumes de discrétisation (voxels) la valeur des amplitudes sismiques enregistrées en fonction du temps.

Ensuite on détermine un ou plusieurs attributs sismiques à partir de ces données sismiques. Ces attributs sont typiquement des mesures sismiques extraites d'une ou de plusieurs images sismiques du sous-sol, au voisinage d'un voxel particulier du sous-sol. Ces attributs peuvent être directement les amplitudes ou être issues d'interprétations des mesures, comme les impédances sismiques des ondes P et/ou S. Le nombre d'attributs sismiques peut être avantageusement réduit à l'aide de technique comme l'analyse en composante principal.

Ces attributs sismiques sont ensuite interprétés par une technique d'analyse en faciès sismiques, qui consiste à interpréter les données sismiques en terme de faciès sismiques, c'est-à-dire en groupes de données homogènes. Pour ce faire, on utilise des techniques de classement (analyse discriminante par exemple) pour construire ces faciès sismiques. Ceci permet de calculer une fonction de classement, c'est-à-dire une relation entre les attributs sismiques et les faciès sismiques. Cette analyse en faciès sismiques peut être supervisée (fonction de classement calibrée à partir d'une base de données pré-existante) ou non-supervisée. De telles méthodes sont par exemple décrites par :

Fournier F., Derain J-F., 1995 : A statistical methodology for deriving reservoir properties from seismic, Geophysics , Vol. 60, No. 5, 1995, p. 1437-1450.

On peut décrire cette méthode dans le cadre de l'analyse supervisée en faciès sismiques. Le problème que l'on cherche alors à résoudre peut être formalisé de la façon suivante: on considère des objets sismiques $\mathbf{x}(x_1,x_2,...,x_N)$ localisés dans l'espace et décrits par un ensemble d'attributs sismiques $x_i$. Parmi l'ensemble des objets sismiques, on suppose que l'on sache en interpréter un certain nombre en termes de faciès sismiques, ces faciès appartenant à une liste prédéterminée $\{C_1,..., C_M\}$. Ces objets particuliers forment la base d'apprentissage. Par exemple, au niveau d'un certain puits, on sait que l'on traverse en un point donné du sous-sol une formation gréseuse, alors que plus bas dans le même puits, on a traversé un intervalle argileux. L'objectif est de chercher à calibrer une relation probabiliste entre les objets sismiques et la liste des faciès sismiques en s'appuyant sur la base d'apprentissage. Pour cela, on utilise la technique d'analyse discriminante, qui permet de calculer pour chaque objet sismique x une vecteur dont chacune des $M$ composantes notées $P(\mathbf{x}/C_j)$ correspond à la probabilité de classement de l'objet en question dans la classe (le faciès sismique) $C_j$. Ces probabilités peuvent être reliées à d'autres quantités par la règle de Bayes :

$$P(C_j/\mathbf{x}) = \frac{P(\mathbf{x}/C_j)P(C_j)}{\sum_{k=1}^{M} P(\mathbf{x}/C_k)P(C_k)}$$

où les termes $P(\mathbf{x}/C_k)$ sont des fonctions de densité de probabilité conditionnelle (au faciès sismique $C_k$), et les $P(C_k)$ sont les probabilités a priori de chaque faciès sismique.

Les probabilités a priori de chaque faciès sismique sont fixées par l'utilisateur de la méthode. Un choix courant consiste à prendre ces probabilités toutes égales à la même valeur $1/M$.

Les fonctions de densité de probabilité conditionnelle sont quant à elles estimées grâce à l'information de la base d'apprentissage. On peut les estimer en faisant l'hypothèse qu'elles suivent une loi gaussienne multivariée (auquel cas la base d'apprentissage est utilisée pour estimer les paramètres de cette loi : moyenne et matrice de variance-covariance). On peut également les estimer, si la taille de la base d'apprentissage le permet, par une méthode non paramétrique , parmi lesquelles la méthode des noyaux, ou la méthode des K plus proches voisins, bien connues des spécialistes.

Sur cette base, l'analyse discriminante procède en deux étapes :

- une étape d'apprentissage, au cours de laquelle on vérifie si la relation probabiliste calibrée est compatible avec l'information de la base d'apprentissage;

- une étape de classement, au cours de laquelle on va utiliser la fonction de classement précédemment calibrée pour estimer les probabilités d'appartenance à l'ensemble des faciès sismiques, pour l'ensemble des objets sismiques mesurés sur le sous-sol.

Ainsi, l'analyse en faciès sismiques permet de déterminer :

- un cube de faciès sismiques ;

- une fonction de classement ;

- un cube de probabilités de classement des faciès sismiques.

*Exemple d'acquisition*

Selon un exemple particulier de réalisation, les attributs sismiques calculés sont les impédances sismiques des ondes P et S. Les diagraphies acquises sont les suivantes :

- diagraphies nécessaires aux calculs d'attributs sismiques et diagraphies nécessaires à la détermination d'une loi profondeur/temps : diagraphie acoustique (« sonic log ») et diagraphie de densité. Ces deux diagraphies permettent de calculer les diagraphies d'impédances P et S.
- diagraphies éventuelles pour compléter le modèle géologiques : porosité.

2- Simulations de données à partir des données acquises (SIM) ;

*Principe*

La contrainte sismique utilisée par la méthode selon l'invention est un cube de proportions moyennes de faciès lithologiques, estimé à partir d'un cube de faciès sismiques. On appelle « proportions moyennes de faciès lithologiques », l'estimation en tout « point » de discrétisation du sous-sol de la proportion de chaque faciès lithologique contenu dans ce « point » de discrétisation. On entend par « point » de discrétisation un intervalle de profondeur pour les diagraphies, et un voxel pour les cubes 3D.

La prise en compte de non-stationnarités géologiques lors de l'estimation de ces proportions moyennes de faciès lithologiques par faciès sismique, augmente le nombre de degrés de liberté du problème. Or, généralement, les données permettant cette estimation sont limitées (données de puits), et les estimations statistiques qui en découlent deviennent peu fiables.

Pour estimer ces proportions tout en tenant compte des non-stationnarités, liées à la profondeur ou à des variations d'autres facteurs comme l'argilosité ou la porosité moyenne des roches en place, la méthode permet d'augmenter artificiellement le nombre de données utilisées pour l'estimation des proportions moyennes de faciès lithologique.

Ces nouvelles données sont générées par une technique de simulation séquentielle par indicatrice (technique de simulation géostatistique 1D), ce qui assure que la variabilité verticale des nouvelles données reproduit celle des données du puits de contrainte (puits utilisé pour la génération des nouvelles données). L'augmentation du nombre de données permet ensuite d'estimer de façon plus fiable les proportions moyennes de faciès lithologique par faciès sismique, en permettant de prendre en compte dans cette estimation des non-stationnarités.

Pour cela, la méthode selon l'invention s'appuie dans un premier temps sur la technique dite des «pseudo-puits », décrite par exemple dans les documents suivants :

- de Groot, P. F. M., Bril, A. H., Floris, F. J. T., and Campbell, A. E., 1996, Monte carlo simulations of wells, Geophysics, vol. 61, no. 3, p 631-638.

- Gançarski, S., Valois, J. P., and Palus, C., 1994, The pseudo-well technique: a tool for statistical calibration of seismic data in a field with limited well control: 56th Mtg. and Techn. Exhib., Eur. Assoc. Expl. Geophys., PO55.

Ces techniques se basent sur des simulations de type Monte Carlo ou Markov Chains. On peut également citer le document suivant dont la méthode se base sur des simulations purement géostatistiques, ce qui permet de prendre en compte la variabilité spatiale des données :

- Joseph, C., F. Fournier, and Vernassa S., 1999, Pseudowell methodology: A guiding tool for lithoseismic interpretation: 69th Annual International Meeting, SEG, Expanded Abstracts , 938-941

Cette dernière méthode permet de générer des réalisations équiprobables de données de puits de résolution verticale élevée comme par exemple des colonnes en faciès lithologiques et les impédances des ondes P et S. Ces réalisations seront appelées par la suite des pseudo-diagraphies, l'ensemble des pseudo-diagraphies correspondant à une réalisation étant appelé pseudo-puits. Les pseudo-diagraphies sont donc des diagraphies simulées, décrites en fonction de la profondeur. Afin de mettre en oeuvre cette technique, il est nécessaire d'effectuer une analyse statistique multivariable de ces paramètres (faciès lithologiques et diagraphies), ainsi qu'une analyse variographique, qui permet de caractériser leurs variations verticales. Cette analyse est effectuée à partir des données d'un puits et est réitérée sur l'ensemble des puits disponibles. La méthode des pseudo-puits est décrite précisément ci-après.

*Méthode des pseudo-puits*

La génération d'un pseudo-puits consiste, à partir de données réelles acquises sur un champ ou sur un affleurement, en la simulation de diagraphies de faciès lithologiques, pétrophysiques ou autres, choisies en fonction de l'objectif de l'étude. Par la suite, on se restreint au cas de la simulation d'une colonne de faciès lithologiques, et d'une diagraphie de porosité.

simulation d'une colonne lithologique

- Afin de simuler une colonne de faciès lithologiques, la technique des pseudo-puits utilise les données de puits disponibles dans un algorithme de simulation séquentielle par indicatrices (Fichtl P., Fournier F., Royer J-J., 1997, Cosimulations of lithofacies and associated reservoir properties using well and seismic data. SPE, Annual technical conference and exhibition of the Society of Petroleum Engineers , 72nd, San Antonio , Oct. 5-8 1997, Proceedings, Part I, pp. 381-393., SPE 38680). Cette méthode ne travaille pas directement sur les faciès lithologiques mais sur les fonctions indicatrices associées, chacune correspondant à un faciès lithologique. Ces fonctions indicatrices $I_i$ ($z$), sont égales à 1 si le faciès lithologique $L_i$ est présent à la profondeur $z$, 0 sinon.

La technique de simulation par indicatrice prend comme données d'entrées :

- les proportions $p_i$ des différents lithofaciès $L_i$ en chaque côte $z$ à simuler, qui donnent les variations moyennes de la géologie et permettent d'effectuer des simulations non stationnaires ;

- des variogrammes modélisés des fonctions indicatrices qui synthétisent l'information sur la variabilité verticale des lithologies étudiées, et définis comme suit :

$$\gamma_i(h) = \frac{1}{2} E\left[\left(I_i(z+h) - I_i(z)\right)^2\right]$$

- des points conditionnants qui imposent, le cas échéant, la lithologie à simuler en certaines cotes $z$ ;

La simulation se fait de façon séquentielle, c'est-à-dire que les lithologies affectées aux différentes profondeurs z sont simulées par autant de tirages aléatoires successifs selon le schéma suivant :

- tirage aléatoire d'une profondeur $z$ à simuler dans la colonne lithologique ;

- krigeage de chaque indicatrice $I_i(z)$ à la cote $z$ en connaissant la nature du lithofaciès en $n$ points conditionnants ou cotes déjà simulées dans le voisinage de $z$. Ce krigeage permet d'estimer la quantité $I_i^*(z)$ associée au lithofaciès $L_i$ considéré;

- normalisation des coefficients $I_i^*(z)$, de manière à ce qu'ils soient tous compris entre 0 et 1, et que leur somme vaille 1. Les coefficients estimés sont alors assimilables à des probabilités d'occurrence des différentes lithologies ;

- construction de l'histogramme cumulé de présence des différents lithofaciès à la profondeur $z$ ;

- simulation du lithofaciès à la profondeur $z$ par tirage de Monte-Carlo dans l'histogramme cumulé : un nombre aléatoire est tiré dans la loi uniforme entre 0 et 1, et l'intervalle où se situe ce nombre aléatoire détermine le lithofaciès simulé à la cote $z$ ;

- ajout du résultat de la simulation aux données conditionnantes et réitération de la boucle jusqu'à épuisement des cotes à simuler.

Notons que la colonne lithologique ainsi obtenue respecte les propriétés du ou des puits de l'étude, aussi bien en terme de proportions de lithofaciès, que de variabilité verticale (variogramme).

simulation d'une diagraphie de porosité Φ

Il existe de nombreuses méthodes pour simuler une propriété quantitative de façon conditionnée à une lithologie. On ne cite à titre d'illustration que quatre méthodes :

- propriété constante par lithofaciès

La valeur de la propriété étudiée est constante et fixée par lithofaciès à partir de données de puits. Cette valeur peut être la valeur moyenne de la propriété pour un lithofaciès donné sur un ou plusieurs puits.

- tirage dans la fonction de répartition expérimentale

Les données de puits permettent de calculer la fonction de répartition expérimentale $F(\Phi l L_i)$ de la propriété choisie pour le lithofaciès $L_i$. A la cote $z$, où le lithofaciès $L_i$ a été simulé. Un nombre aléatoire $u$ est tiré sur une loi uniforme entre 0 et 1. La valeur de la propriété simulée Φ est alors telle que : $\Phi = F^{-1}(u)$

- tirage dans la fonction de répartition normale

La méthode est identique au tirage dans la fonction de répartition expérimentale à ceci près que l'on impose à $F$ d'être une loi normale de moyenne $m_i$ et d'écart type $\sigma_i$ calculés à l'aide des données du puits.

- cosimulation séquentielle gaussienne

Cette méthode est plus complexe à mettre en oeuvre, car elle implique la détermination d'un modèle de co-régionalisation entre la porosité et l'ensemble des fonctions indicatrices, modèle le plus souvent impossible à déterminer à partir des seules données de puits.

*Résultats*

Ainsi, à partir des diagraphies issues des données géologiques, et à l'aide de simulations séquentielles par indicatrice (méthode des pseudo-puits), on génère des diagraphies géologiques simulées appelées pseudo-diagraphies, et correspondant à des réalisations équiprobables de diagraphies relatives à des propriétés géologiques. On distingue deux types de pseudo-diagraphies :

- les pseudo-diagraphies nécessaires aux calculs d'attributs sismiques ;

- les pseudo-diagraphies de faciès lithologiques.

3- Construction d'une contrainte sismique pour le modèle géologique (SC) ;

La contrainte sismique utilisée par la méthode selon l'invention est un cube de proportions moyennes de faciès lithologiques estimé à partir d'un cube de faciès sismiques. Dans un premier temps on détermine au niveau des puits et des puits simulés (« pseudo-puits ») les proportions moyennes de faciès lithologiques ainsi que des faciès sismiques. Puis dans un second temps, on estime la distribution de proportions de faciès lithologiques, permettant ainsi de construire un cube de proportions moyennes de faciès lithologique.

*Traitement des diagraphies mesurées et simulées*

Ce traitement permet de déterminer au niveau des puits et des puits simulés (« pseudo-puits ») les proportions moyennes de faciès lithologiques ainsi que des faciès sismiques. Pour ce faire on procède en cinq étapes pour chaque puits et chaque puits simulé :

a)- Calcul d'attributs à partir des diagraphies nécessaires aux calculs d'attributs sismiques
Les attributs utilisés préalablement pour l'analyse de faciès sismique des données sismiques sont également calculés au niveau de tous les puits (y compris les puits simulés). Dans le cadre de notre exemple il s'agit d'utiliser les diagraphies mesurées et les diagraphies simulées de la densité et du « sonic log » pour déterminer les attributs suivants : impédances sismiques P et S.

b)- Conversion profondeur/temps des diagraphies et des courbe de proportions

Ensuite, on convertit toutes les diagraphies dans le domaine temps, en s'appuyant sur la loi de conversion temps-profondeur disponible au niveau du puits correspondant, puis on les ré-échantillonne à un pas de temps très fin pour éviter les phénomènes de repliement spectral lors du filtrage

c)- Détermination d'une courbe de proportion de faciès lithologiques

On calcule à partir de toutes les diagraphies de faciès lithologiques une courbe de proportions verticales de faciès lithologiques, en évaluant la fréquence d'apparition des différents faciès dans une fenêtre temporelle glissante, dont la taille correspond à la résolution verticale des données sismiques. On obtient ainsi, pour chaque pas de temps, une valeur de proportions de faciès lithologiques.

d)- Ré-échantillonnage des diagraphies et des courbes au pas des données sismiques

Par construction, les courbes de proportions verticales de faciès lithologiques sont au pas de temps des données sismiques. Concernant les autres diagraphies (impédances par exemple), on applique un filtre fréquentiel passe-bas, afin d'éliminer les hautes fréquences, non présentes dans l'information sismique, avant de procéder au ré-échantillonnage de l'ensemble des diagraphies au pas de la sismique.

e)- Détermination d'une diagraphie de faciès sismique à partir de la fonction de classement

Enfin, on utilise la fonction de classement déterminée lors de l'analyse en faciès sismique des données sismiques pour interpréter toutes les diagraphies (mesurées et simulées) en termes de faciès sismique. On obtient alors des réalisations de pseudo-diagraphies de faciès sismiques, ainsi que des diagraphies de faciès sismiques.

*Construction d'un cube de proportions moyennes de faciès lithologiques*

Soient :

- $FS_i$ le faciès sismique $i$

- $FL_j$ le faciès lithologique $j$

- $prop(FL_j)$ la proportion du faciès lithologique $j$

- $P(prop(FL_j))$ la distribution de la proportion du faciès lithologique $j$

- $P(prop(FL_j)/FS_i)$ la distribution conditionnelle de proportions de faciès lithologique $j$ pour le faciès sismique $i$.

- $P(FS_i)$

Dans cette dernière étape, on estime les distributions conditionnelles de proportions de faciès lithologiques par faciès sismique, à partir des diagraphies mesurées et simulées. Par exemple, pour un faciès sismique $FS_i$, on relève sur toutes les diagraphies (mesurées et simulées) la valeur de la proportion du faciès lithologique $FL_j$. On en déduit la distribution de la valeur de la proportion du faciès $FL_j$ pour le faciès $FS_i$ :

$$P\!\left(prop(FL_j)\big/FS_i\right)$$

On réitère pour tous les faciès lithologiques au sein du faciès sismiques $FS_i$, et l'on réitère à nouveau sur l'ensemble des faciès sismiques.

Du fait du nombre important de données disponibles, dû à la simulation de diagraphies, on peut prendre en compte dans cette estimation des facteurs de non-stationnarité supplémentaires (profondeur, argilosité...). Ainsi, on est à même de caractériser les distributions $P(prop(FL_j)/FS_i,z,Vclay...)$ qui ont plus de chance d'être stationnaires spatialement que les distributions globales $P(prop(FL_j)/FS_i)$.

En combinant le cube de faciès sismique, le cube de probabilités de classement des faciès sismiques $P(FS_i)$ (issues de l'analyse de faciès sismiques) et les distributions conditionnelles $P(prop(FL_j)/FS_i)$ précédemment calculées, on estime un cube de distributions de proportions de faciès lithologiques $P(prop(FL_j))$.

Cette ultime étape s'appuie sur l'axiome des probabilités totales :

$$P\big(prop\big(FL_j\big)\big) = \sum_i P\big(prop\big(FL_j\big)/FS_i\big)P\big(FS_i\big)$$

A cette étape, on dispose alors en chaque point du sous-sol d'une distribution de proportions de faciès lithologique. De chaque distribution locale, on peut alors extraire la moyenne, qui constituera la contrainte sismique nécessaire pour la modélisation géologique telle que la décrit le document Doligez et al. (2002) cité plus haut. Cependant, disposant de suffisamment de données pour extraire des paramètres statistiques fiables de ces distributions, la méthode selon l'invention permet également d'estimer l'incertitude sur chaque proportion locale de chaque facies lithologique, en calculant à partir de ces distribution un écart type, un intervalle inter-quartile, ou un intervalle de confiance sur la moyenne.

### 4- Construction du modèle géologique contraint par la contrainte sismique (GM).

La contrainte sismique ainsi estimée se présente sous la forme de volumes tridimensionnels de proportions moyennes de chaque faciès lithologique, c'est-à-dire que l'on dispose en chaque point du sous-sol des probabilités moyennes de rencontrer les différentes instances de chaque faciès lithologique. Cette information contraint ensuite le processus de modélisation géologique stochastique, qui permet de fournir des modèles équiprobables du sous-sol par un processus de tirage aléatoire : en chaque point du sous-sol, la fréquence relative d'occurrence des différents faciès lithologiques calculée à partir des différentes réalisation de modèle du sous-sol sera égale à la probabilité moyenne de ce faciès, déduite des données sismiques.

On construit ainsi un modèle géologique dans lequel les cartes 3D associées de propriétés géologiques sont contraintes par le cube de proportions moyennes de faciès lithologique, déduit des données sismiques.

### Validation de la méthode : étude de cas

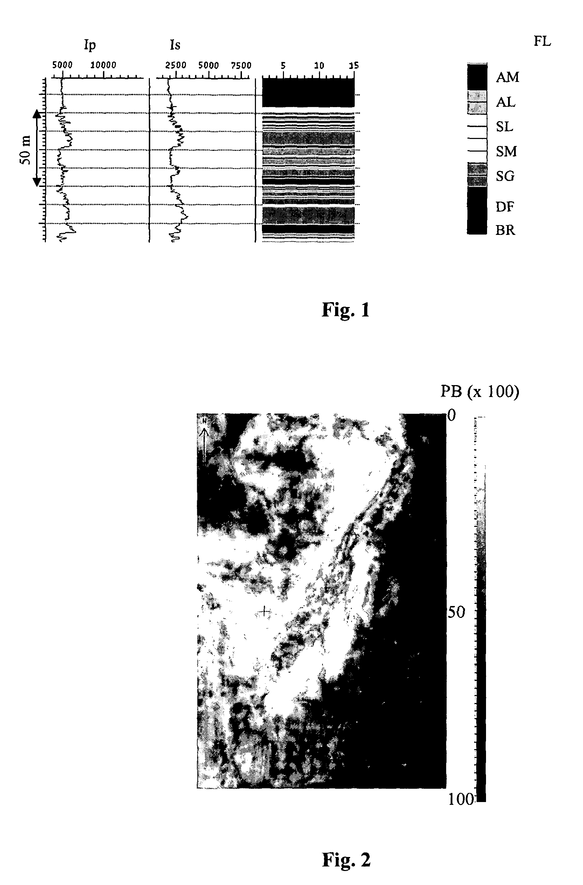

L'application de la méthode selon l'invention est illustrée sur un exemple réel où l'on cherche à définir une contrainte sismique sous la forme de volumes de proportions moyennes de faciès lithologiques en intégrant l'information de puits où sont définis les faciès lithologiques et l'information sismique. La figure 1 présente les données diagraphiques disponibles au niveau d'un puits : interprétation en faciès géologiques (à droite), diagraphies d'impédances P et S (à gauche et au centre). La nomenclature suivante est utilisée pour les faciès lithologiques (FL) : AM (argiles massives), AL (argiles laminées), SL (sables laminés), SM (sables massifs), SG (sables grossiers), DF (débris-flows), BR (brèches). La figure 2 présente l'information sismique sous la forme d'une carte issue d'un volume 3D renseigné en probabilités (PB) d'un faciès sismique particulier (argile massive - AM). Cette carte est extraite du cube le long d'un niveau réservoir. Les zones de faible probabilité de ce faciès sismique permettent d'identifier les formations réservoirs, susceptibles de contenir des hydrocarbures.

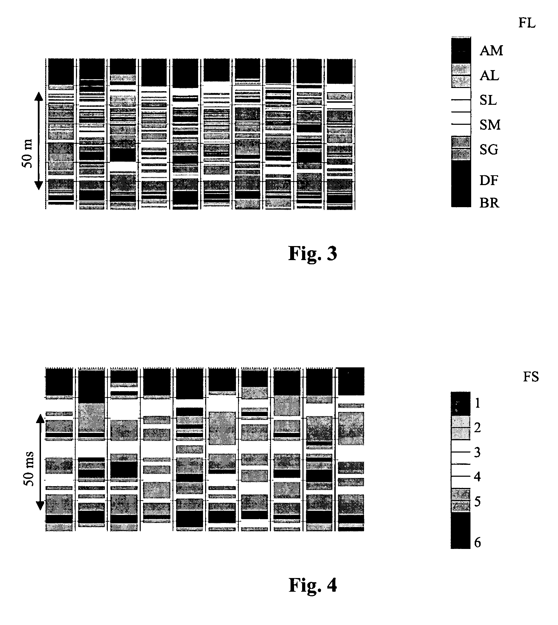

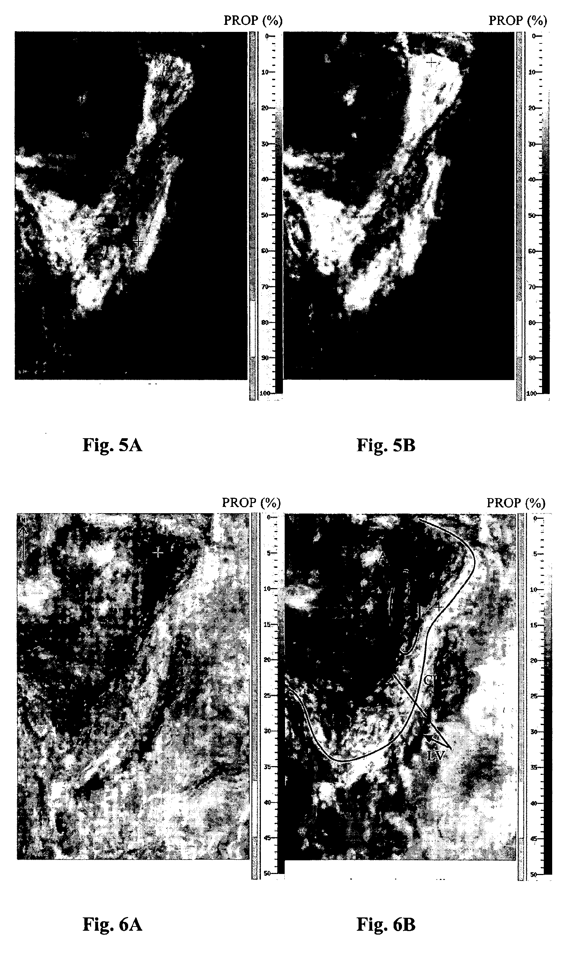

Une analyse croisée préalable de l'information sismique et de l'information géologique montre dans ce cas que la relation entre faciès sismique et faciès lithologique n'est pas stationnaire, le principal facteur influençant cette non-stationnarité étant la profondeur. Selon l'invention, on génère des pseudo-puits renseignés en faciès lithologiques, ainsi qu'en impédances P et S (qui sont les attributs utilisés pour générer l'interprétation en faciès sismiques de la figure 2). La figure 3 montre dix réalisations particulières en faciès lithologiques (FL), correspondant au puits de la figure 1. On constate que les colonnes lithologiques simulées montrent une variabilité spatiale similaire : les niveaux réservoirs à sables sont généralement générés à des profondeurs similaires. La succession verticale des faciès lithologiques est également proche de ce que l'on obtient sur la figure 1. Après avoir transformé les simulations d'impédances P et S associées à ces colonnes de faciès lithologiques, en des pseudo-diagraphies d'impédances dont l'échantillonnage et la résolution verticale sont similaires aux données sismiques, on leur applique la fonction de classement utilisée pour générer l'interprétation de la figure 2. La figure 4 montre les dix colonnes en faciès sismiques (FS) le plus probable correspondant aux dix colonnes en faciès lithologiques (FL) de la figure 3. Le processus de simulation est poursuivi jusqu'à générer 5000 réalisations de pseudo-puits (500 simulations par puits * 10 puits), ce qui est jugé suffisant pour évaluer de façon fiable les distributions conditionnelles de proportions de faciès lithologique par faciès sismique. Les proportions moyennes de faciès lithologiques sont ensuite calculées en mettant en regard les simulations de faciès sismiques (figure 4) et les courbes de proportions verticales de facies géologiques. Ces proportions moyennes prennent de plus en compte la dépendance avec la profondeur : pour cela, on s'appuie sur la définition des marqueurs géologiques repérés dans chaque puits pour isoler des intervalles en profondeur, les proportions moyennes de faciès lithologiques par faciès sismiques étant ensuite calculées indépendamment les unes des autres dans chaque intervalle. Les figures 5A et 5B montrent le résultat final en termes de proportions moyennes d'argiles massives (PROP), calculées en combinant les cartes de probabilités de faciès sismiques telle que celle de la figure 2, et les distributions de faciès lithologique par faciès sismique calculées précédemment. Les figures 5A et 5B présentent les cartes de proportions moyennes des argiles massives extraites au niveau du réservoir cité sur la figure 1. Sur la figure 5A, ces proportions ont été obtenues sans l'aide de la méthode selon l'invention : seules les données de puits initiales ont été pris en compte (ce qui interdit de tenir compte de la non-stationnarité verticale). Sur la figure 5B, ces proportions ont été obtenues avec l'aide de la méthode selon l'invention : le résultat des simulations et la non-stationnarité verticale des distributions ont été pris en compte. Les zones de faible proportion moyenne (en blanc sont plus précisément définies sur la figure 5B).

Les figures 6A et 6B montrent le même type de résultats pour les argiles laminées (AL). Sur la figure 6A, ces proportions ont été obtenues sans l'aide de la méthode selon l'invention, tandis que sur la Figure 6B, ces proportions ont été obtenues avec l'aide de la méthode selon l'invention. Les zones de plus fortes proportions moyennes sont beaucoup plus difficiles à identifier sur la figure 6A. Au contraire, sur la figure 6B, elles sont mieux définies : les argiles laminées (AL) apparaissent de façon non négligeable en bordure d'un chenal orienté Nord/ Sud (CH). Cela est compatible avec la présence de levées (LV). En comparaison, on voit sur la figure 6A que si on ne prend pas en compte la non-stationnarité verticale, la proportion moyenne de ce faciès "argiles laminées" (AL) dans la même zone est largement sous-évaluée. Notons également les détails qui apparaissent comme un chenal secondaire (zone A).

La méthode selon l'invention permet d'estimer en tout point du sous-sol des distributions de faciès lithologiques tirant pleinement partie de l'information sismique et de ses non-stationnarités spatiales. La moyenne de ces distributions étant plus robuste et mieux calibrée permet ensuite une meilleure modélisation géologique, et par conséquent une meilleure exploitation du gisement pétrolier correspondant au modèle géologique. La méthode selon l'invention permet également d'estimer les incertitudes sur cette contrainte sismique. Potentiellement, elle permet de mieux intégrer l'information sismique dans la modélisation géologique.

## Revendications

1. Méthode de construction d'un modèle géologique d'une formation du sous-sol contraint par des données sismiques, à partir de diagraphies relatives à des propriétés géologiques dudit sous-sol acquises au sein d'au moins un puits traversant ledit sous-sol, dans laquelle on construit au moins un cube de faciès sismiques, **caractérisée en ce que** la méthode comporte les étapes suivantes :

   - on génère des diagraphies géologiques simulées, correspondant à des réalisations équiprobables de diagraphies relatives à des propriétés géologiques, en réalisant une simulation séquentielle par indicatrice à partir desdites diagraphies acquises au puits ;
   - on génère des diagraphies de faciès sismiques simulées, correspondant à des réalisations équiprobables de diagraphies relatives auxdits faciès sismiques, en interprétant lesdites diagraphies géologiques simulées ;
   - on construit un cube de distributions de proportions de faciès lithologique en estimant en tout point du sous-sol lesdites distributions de proportions à l'aide desdites diagraphies acquises au puits et desdites diagraphies simulées ;
   - on construit un cube de proportions moyennes de faciès lithologique à partir desdites distributions de proportions estimées en tout point du sous-sol ;
   - on construit un modèle géologique dans lequel les propriétés géologiques sont contraintes par ledit cube de proportions moyennes de faciès lithologique.

2. Méthode selon la revendication 1, dans laquelle lesdites diagraphies de faciès sismiques simulées sont générées à l'aide d'une relation entre lesdites données sismiques et les faciès sismiques dudit cube, ladite relation étant obtenue par une analyse en faciès sismiques ;

3. Méthode selon l'une des revendications précédentes, dans laquelle lesdites proportions moyennes de faciès lithologique sont estimées en réalisant les étapes suivantes :

   - on estime des distributions conditionnelles de proportions de faciès lithologiques par faciès sismique à partir desdites diagraphies acquises au puits et desdites diagraphies simulées, géologiques et de faciès sismiques ;
   - on détermine des probabilités de classement desdits faciès sismiques ainsi qu'une relation entre lesdites données sismiques et lesdits faciès sismiques, à l'aide d'une analyse en faciès sismiques ;
   - on estime en tout point du sous-sol lesdites proportions de faciès lithologiques en tout point du sous-sol, en combinant lesdites distributions conditionnelles auxdites probabilités de classement.

4. Méthode selon l'une des revendications précédentes, dans laquelle lesdites diagraphies géologiques simulées comportent au moins l'une des diagraphies suivantes : diagraphie de faciès lithologiques, diagraphie d'impédances d'ondes P et diagraphie d'impédances d'ondes S.

**5.** Méthode selon la revendication 1, dans laquelle les diagraphies simulées sont générées en profondeur puis converties en temps à l'aide d'une loi de conversion temps-profondeur déterminée au niveau dudit puits.

**6.** Méthode selon la revendication 5, dans laquelle les diagraphies simulées et converties en temps sont rééchantillonnées au pas desdites données sismiques.

**7.** Méthode selon la revendication 4, dans laquelle les diagraphies simulées relatives à des faciès lithologiques sont rééchantillonées en déterminant une courbe de proportions verticales, en évaluant la fréquence d'apparition des différents faciès lithologiques dans une fenêtre temporelle glissante dont la taille correspond à la résolution verticale desdites données sismiques.

**8.** Méthode selon la revendication 4, dans laquelle les diagraphies simulées non relatives à des faciès lithologiques sont rééchantillonées en appliquant un filtre fréquentiel passe-bas, afin d'éliminer les hautes fréquences non présentes dans lesdites données sismiques.

**9.** Méthode selon l'une des revendications précédentes, dans laquelle l'estimation des distributions de proportions de faciès lithologiques comporte l'utilisation de facteurs de non-stationnarité tels que la profondeur ou l'argilosité.

**10.** Méthode selon l'une des revendications précédentes, dans laquelle on estime une incertitude sur lesdites distributions de proportions de faciès lithologique estimées en tout point du sous-sol.

**11.** Méthode selon la revendication 10, dans laquelle on estime l'incertitude en calculant au moins un des paramètres statistiques suivants : un écart type des distributions, un intervalle inter-quartile des distributions, un intervalle de confiance sur la moyenne des distributions.

**Fig. 1**

**Fig. 2**

FL

AM
AL
SL
SM
SG
DF
BR

Fig. 3

FS

1
2
3
4
5
6

Fig. 4

Fig. 5A                          Fig. 5B

Fig. 6A                          Fig. 6B

| | Office européen<br>des brevets | **RAPPORT DE RECHERCHE EUROPEENNE** | Numéro de la demande<br>EP 07 29 1427 |

## DOCUMENTS CONSIDERES COMME PERTINENTS

| Catégorie | Citation du document avec indication, en cas de besoin,<br>des parties pertinentes | Revendication<br>concernée | CLASSEMENT DE LA<br>DEMANDE (IPC) |
|---|---|---|---|
| Y | WO 2004/095072 A (EXXONMOBIL UPSTREAM RES<br>CO [US]; YIN HEZHU [US])<br>4 novembre 2004 (2004-11-04)<br>* revendications 1-9 *<br>* figures 1-4 *<br>----- | 1-11 | INV.<br>G01V1/28<br>G01V1/30<br>G01V11/00 |
| Y | US 6 374 185 B1 (TANER M TURHAN [US] ET<br>AL) 16 avril 2002 (2002-04-16)<br>* revendications 1,2 *<br>* figures 2-4 *<br>----- | 1-11 | |
| Y | EP 0 745 870 A2 (PHILLIPS PETROLEUM CO<br>[US]) 4 décembre 1996 (1996-12-04)<br>* revendications 1-3 *<br>* figures 4,5 *<br>----- | 1-11 | |
| A | US 4 679 174 A (GELFAND VALERY A [US])<br>7 juillet 1987 (1987-07-07)<br>* colonne 9, ligne 67 - colonne 10, ligne<br>36 *<br>* figure 8 *<br>----- | 1-11 | **DOMAINES TECHNIQUES<br>RECHERCHES (IPC)** |
| D,A | FOURNIER F ET AL: "A STATISTICAL<br>METHODOLOGY FOR DERIVING RESERVOIR<br>PROPERTIES FROM SEISMIC DATA"<br>GEOPHYSICS, SOCIETY OF EXPLORATION<br>GEOPHYSICISTS, TULSA, OK, US,<br>vol. 60, no. 5, septembre 1995 (1995-09),<br>pages 1437-1450, XP002070858<br>ISSN: 0016-8033<br>* le document en entier *<br>----- | 1-11 | G01V |

Le présent rapport a été établi pour toutes les revendications

| Lieu de la recherche | Date d'achèvement de la recherche | Examinateur |
|---|---|---|
| La Haye | 25 avril 2008 | Modesto, Carlos |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

 .................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 07 29 1427

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-04-2008

| Document brevet cité au rapport de recherche | | | Date de publication | Membre(s) de la famille de brevet(s) | | Date de publication |
|---|---|---|---|---|---|---|
| WO 2004095072 | A | | 04-11-2004 | AUCUN | | |
| US 6374185 | B1 | | 16-04-2002 | AUCUN | | |
| EP 0745870 | A2 | | 04-12-1996 | AU | 673795 B1 | 21-11-1996 |
| | | | | CA | 2177771 A1 | 02-12-1996 |
| | | | | DK | 745870 T3 | 17-03-2003 |
| | | | | NO | 962267 A | 02-12-1996 |
| | | | | US | 5706194 A | 06-01-1998 |
| US 4679174 | A | | 07-07-1987 | AUCUN | | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Truncated plurigaussian method : theoretical and practical points of view. **LE LOC'H G. ; GALLI A.** Geostatistics Wollongong'96. Kluwer, 1997, 211-222
- **DOLIGEZ B. ; FOURNIER F. ; JOLIVET G. ; GANCARSKI S. ; BEUCHER H.** Seismic facies map integration in geostatistical geological model: a field case. *EAGE, conference & technical exhibition of European Association of Geoscientists & Engineers,* 2002, vol. 2, 215-219
- **BARENS L. ; BIVER P.** Reservoir Facies Prediction from Geostatistical Inverted Seismic Data, Abu Dhabi International Conference and Exhibition. *SPE 88690-MS.,* 10 Octobre 2004
- **FOURNIER F. ; DERAIN J-F.** A statistical methodology for deriving reservoir properties from seismic. *Geophysics,* 1995, vol. 60 (5), 1437-1450
- **DE GROOT, P. F. M. ; BRIL, A. H. ; FLORIS, F. J. T. ; CAMPBELL, A. E.** Monte carlo simulations of wells. *Geophysics,* 1996, vol. 61 (3), 631-638
- **GANÇARSKI, S. ; VALOIS, J. P. ; PALUS, C.** The pseudo-well technique: a tool for statistical calibration of seismic data in a field with limited well control: 56th Mtg. and Techn. *Exhib., Eur. Assoc. Expl. Geophys., PO55.,* 1994
- **JOSEPH, C. ; F. FOURNIER ; VERNASSA S.** Pseudowell methodology: A guiding tool for lithoseismic interpretation: 69th Annual International Meeting. *SEG, Expanded Abstracts,* 1999, 938-941
- **FICHTL P. ; FOURNIER F. ; ROYER J-J.** Cosimulations of lithofacies and associated reservoir properties using well and seismic data. SPE, Annual technical conference and exhibition of the Society of Petroleum Engineers. *Proceedings,* 1997, 381-393